# EUROPEAN PATENT APPLICATION

(11) **EP 4 659 890 A1**
(43) Date of publication of application: **10.12.2025**
(21) Application number: 24179856.0
(22) Date of filing: 04.06.2024
(51) Int. Cl.: B23K 26/03, B23K 26/08, B23K 26/70, B23K 26/082

(54) **LOCALIZATION OF A WORKPIECE RELATIVE TO A LASER BEAM**

(71) Applicant: Koninklijke Philips N.V., 5656 AG Eindhoven (NL); Fraunhofer-Gesellschaft zur Förderung der angewandten Forschung e.V., 80686 München (DE)
(72) Inventor: Zuric, Milena, 5656 AG Eindhoven (NL); VRIJBURG, Folkert, 5656 AG Eindhoven (NL); BUITENDIJK, Jeroen Sebastiaan, 5656 AG Eindhoven (NL)
(74) Representative: Philips Intellectual Property & Standards

(57) **Abstract**

The present invention relates to a method of determining a position of a workpiece (12) relative to a laser beam (14) of a laser processing tool (10), wherein the workpiece (12) is to be processed by the laser beam (14). The laser processing tool (10) comprises a supporting member (16) configured for supporting the workpiece (12), a laser beam generator (18) configured for generating the laser beam (14), a scanning device (24) configured for displacing at least one of the laser beam (14) and the supporting member (16) so as to scan the laser beam (14) over the workpiece (12), and at least one optical detector (32) arranged in a predefined position relative to the laser beam (14) and configured to detect electromagnetic radiation coming from locations on the workpiece (12), where the laser beam (14) impinges on the workpiece (12). The workpiece (12) comprises a structure having a predefined position on the workpiece (12) and being configured to be detectable by the at least one optical detector (32) based on a change of at least one characteristic of said detected electromagnetic radiation when the laser beam (14) passes across the structure. The method comprises the steps of scanning the laser beam (14) over the workpiece (12) by means of the scanning device (24) and, during said scanning, obtaining displacement coordinates indicative of a relative displacement between the laser beam (14) and the supporting member (16), synchronously with the scanning, collecting output data from the at least one optical detector (32) to obtain registered data comprising the displacement coordinates and the output data registered to each other, determining the position of the structure of the workpiece (12) relative to the displacement coordinates from an analysis of the registered data, and determining the position of the workpiece (12) relative to the laser beam (14) based on the determined position of the structure relative to the displacement coordinates. The invention further relates to a corresponding apparatus for carrying out the method and a laser processing tool.

## Description

### FIELD OF THE INVENTION

The present invention generally relates to the field of processing of workpieces by a laser beam. More specifically, the present invention relates to a method of determining a position of a workpiece relative to a laser beam of a laser processing tool, wherein the workpiece is to be processed by the laser beam. The invention further relates to an apparatus for determining a position of a workpiece relative to a laser beam of a laser processing tool. Furthermore, the present invention relates to a laser processing tool for processing a workpiece by a laser beam and a computer program for carrying out the method of determining a position of a workpiece relative to a laser beam.

### BACKGROUND OF THE INVENTION

Laser processing tools are typically used for e.g. cutting, engraving, structuring, welding, treating by heat or coating. An example is a laser cutting machine, wherein the laser beam is used to cut a workpiece, or a laser ablation machine, wherein the laser beam is used to ablate material from the workpiece. Workpieces made of any type of materials, in particular metals, plastics, glass, ceramics, stone, wood, textiles and paper may be processed by a laser beam. In general, a laser processing tool comprises a laser beam generator for generating a laser beam, and a supporting member for supporting the workpiece. The supporting member and the laser beam are displaceable relative to each other, wherein either the supporting member may be displaceable, the laser beam may be displaceable, or both the supporting member and the laser beam may be displaceable. The laser processing tool generally comprises a scanning device to displace the laser beam and/or the supporting member, so as to scan the laser beam over the workpiece. Scanning may be performed in at least one direction, preferably in two mutually perpendicular directions, for example in an xy-plane. In order to accurately process the workpiece, it is necessary to determine the position of the workpiece relative to the laser beam before processing the workpiece by the laser beam.

Ilya Alexeev et al. disclose in the article "LASER FOCUS POSITIONING METHOD WITH SUBMICROMETER ACCURACY", Applied Optics, vol. 52, No. 3, 20 January 2013, pages 415-421 a method that allows detecting the laser beam focus plane position with respect to the workpiece surface. The method uses the processing laser beam as a basis for the measurement. The focus plane position detection is based on the back-reflected signal. The setup for the detection uses a confocal microscope. While this article deals with the laser beam focus plane position relative to the workpiece, i.e. the distance in direction of the z-axis between the workpiece surface and e.g. the focusing optics of the laser processing tool, it does not consider workpiece localization with respect to the laser beam in directions perpendicular to the z-axis, i.e. in the xy-plane, nor the rotational position of the workpiece with respect to the laser beam.

Particularly for applications that require precision with a resolution of few µm, determining the exact position of the workpiece relative to the processing laser beam in the xy-plane is a challenge that can currently be solved only through time-consuming and complex to integrate, as well as expensive measurement systems. Up to now, this problem has been solved by positioning through tactile probing and positioning with cameras, both being time-consuming and must be performed before the processing of the workpiece. Another conventional method is positioning the workpiece through OCT (Optical Coherence Tomography) with the drawback that the OCT system has its own optical path and cannot be used during the processing of the workpiece or requires a very complex integration in the processing laser beam optical path. Furthermore, an OCT system cannot be integrated into every laser processing tool.

### SUMMARY OF THE INVENTION

It is an object of the present invention to provide a method of determining a position of a workpiece relative to a laser beam of a laser processing tool by which the position of the workpiece relative to the laser beam can be determined accurately and by means of relatively simple tools.

It is a further object of the present invention to provide a method of determining a position of a workpiece relative to a laser beam of a laser processing tool which is less time-consuming.

It is a further object of the present invention to provide an apparatus for determining a position of a workpiece relative to a laser beam of a laser processing tool which is less complex.

It is a further object of the present invention to provide a laser processing tool comprising such an apparatus.

It is a still further object of the present invention to provide a computer program configured to carry out the method according to the invention in a laser processing tool.

In a first aspect of the present invention, a method of determining a position of a workpiece relative to a laser beam of a laser processing tool is provided, wherein the workpiece is to be processed by the laser beam, wherein the laser processing tool comprises:
- a supporting member configured for supporting the workpiece;
- a laser beam generator configured for generating the laser beam;
- a scanning device configured for displacing at least one of the laser beam and the supporting member so as to scan the laser beam over the workpiece; and
- at least one optical detector arranged in a predefined position relative to the laser beam and configured to detect electromagnetic radiation coming from locations on the workpiece, where the laser beam impinges on the workpiece;

wherein the workpiece comprises a structure having a predefined position on the workpiece and being configured to be detectable by the at least one optical detector based on a change of at least one characteristic of said detected electromagnetic radiation when the laser beam passes across the structure;
wherein the method comprises the steps of:
   - scanning the laser beam over the workpiece by means of the scanning device and, during said scanning, obtaining displacement coordinates indicative of a relative displacement between the laser beam and the supporting member;
   - synchronously with the scanning, collecting output data from the at least one optical detector to obtain registered data comprising the displacement coordinates and the output data registered to each other;
   - determining the position of the structure of the workpiece relative to the displacement coordinates from an analysis of the registered data; and
   - determining the position of the workpiece relative to the laser beam based on the determined position of the structure relative to the displacement coordinates.

The method according to the invention advantageously makes use of the laser beam which is also used to process the workpiece. Scanning the laser beam over the workpiece may be performed by displacing the laser beam, the supporting member supporting the workpiece, or both the laser beam and the supporting member supporting the workpiece relative to each other. The laser beam may be scanned over the workpiece at an intensity which preferably is lower than an intensity used for processing the workpiece. According to the invention, at least one optical detector is arranged in a predefined position relative to the laser beam to detect electromagnetic radiation coming from locations on the workpiece or the supporting member, where the laser beam impinges on the workpiece or the supporting member. The at least one optical detector preferably is a single light-sensitive element. Preferably, the at least one optical detector is a photodiode. The at least one optical detector may be arranged at a focusing lens of the laser processing tool. The at least one optical detector may be sensitive in a narrow spectral range of wavelengths, however may also be sensitive in a broad spectral range of wavelengths. The at least one optical detector may be sensitive to the wavelength or the wavelength band of the laser beam so that the at least one optical detector can detect light of the laser beam reflected back from the workpiece or from the supporting member. In some embodiments, the at least one optical detector may be sensitive to one or more wavelengths or wavelength bands different from the wavelength or wavelength band of the laser beam. For example, the at least one optical detector may be sensitive to NIR (Near Infrared) emission, VIS (Visible) emission, or to wavelengths in the UV spectral range.

The workpiece of which the position is to be determined relative to the laser beam of the laser processing tool comprises a structure having a predefined position on the workpiece and being configured to be detectable by the at least one optical detector based on a change of at least one characteristic of said detected electromagnetic radiation when the laser beam passes across the structure.

When the laser beam passes across the structure, a characteristic, in particular intensity and/or wavelength, of the electromagnetic radiation received by the at least one optical detector will change as described herein. Thus, the structure is detectable from the change of the characteristic by the at least one optical detector.

When the laser beam is scanned over the workpiece, displacement coordinates which are indicative of a relative displacement between the laser beam and the supporting member are obtained and preferably recorded. During scanning and synchronously with the recording of the displacement coordinates, output data from the at least one optical detector is collected and registered with the displacement coordinates. The displacement coordinates may be coordinates of the scanning system representing a displacement of the scanning system relative to a predefined reference position of the scanning system. It will be clear for the skilled person that such coordinates of the scanning system are indicative of a relative displacement between the laser beam and the supporting member. The output data from the at least one optical detector is matched with the displacement coordinates. In other words, the output data from the at least one optical detector is collected synchronously to the scan position of the laser beam relative to the supporting member. The registered data are analyzed to determine the position of the structure of the workpiece relative to the displacement coordinates of the relative displacement between the laser beam and the supporting member. Analyzing the registered data may comprise analyzing the output data from the at least one detector relating to intensity and/or wavelength, in particular changes of intensity and/or wavelength in the output data. The position of the workpiece relative to the laser beam can be accurately determined on the basis of the determined position of the detected structure relative to the displacement coordinates.

The method according to the invention is less time-consuming than conventional position determination methods. Further, the method according to the invention makes use of one or more single optical detectors, preferably photodiodes, which can be easily integrated into existing laser processing tools.

As used herein, the term "position" may include a lateral position in an xy-plane of a Cartesian coordinate system, transverse or perpendicular to the laser beam. The term "position" may in addition or alternatively include a rotational position (orientation) of the workpiece relative to the laser beam around an axis perpendicular to the xy-plane.

In a second aspect of the present invention, an apparatus for determining a position of a workpiece relative to a laser beam of a laser processing tool is provided, the laser processing tool comprising:
- a supporting member configured for supporting the workpiece;
- a laser beam generator configured for generating the laser beam;
- a scanning device configured for displacing at least one of the laser beam and the supporting member so as to scan the laser beam over the workpiece;

wherein the apparatus comprises:
   - at least one optical detector arranged in a predefined position relative to the laser beam and configured to detect electromagnetic radiation coming from locations on the workpiece where the laser beam impinges on the workpiece,
wherein the workpiece comprises a structure having a predefined position on the workpiece and being configured to be detectable by the at least one detector based on a change of at least one characteristic of said detected electromagnetic radiation when the laser beam passes across the structure; and
   - a controller configured to:
      - cause the scanning device to scan the laser beam over the workpiece;
      - obtain, during said scanning, displacement coordinates indicative of a relative displacement between the laser beam and the supporting member;
      - synchronously with the scanning, collect output data from the at least one optical detector to obtain registered data comprising the displacement coordinates and the output data registered to each other;
      - determine the position of the structure of the workpiece relative to the displacement coordinates from an analysis of the registered data; and
      - determine the position of the workpiece relative to the laser beam based on the determined position of the structure relative to the displacement coordinates.

In a third aspect of the present invention, a laser processing tool for processing a workpiece by a laser beam is provided, comprising:
- a supporting member configured for supporting the workpiece;
- a laser beam generator configured for generating the laser beam;
- a scanning device configured for displacing at least one of the laser beam and the supporting member so as to scan the laser beam over the workpiece; and
   an apparatus for determining a position of the workpiece relative to the laser beam generated by the laser beam generator, said apparatus comprising:
   - at least one optical detector arranged in a predefined position relative to the laser beam and configured to detect electromagnetic radiation coming from locations on the workpiece where the laser beam impinges on the workpiece,
      wherein the workpiece comprises a structure having a predefined position on the workpiece and being configured to be detectable by the at least one optical detector based on a change of at least one characteristic of said detected electromagnetic radiation when the laser beam passes across the structure; and
- a controller configured to:
   - cause the scanning device to scan the laser beam over the workpiece;
      obtain, during said scanning, displacement coordinates indicative of a relative displacement between the laser beam and the supporting member;
   - synchronously with the scanning, collect output data from the at least one optical detector to obtain registered data comprising the displacement coordinates and the output data registered to each other;
   - determine the position of the structure of the workpiece relative to the displacement coordinates from an analysis of the registered data; and
   - determine the position of the workpiece relative to the laser beam based on the determined position of the structure relative to the displacement coordinates.

Thus, the apparatus according to the second aspect may be advantageously integrated in a laser processing tool according to the third aspect without structural complexity. The apparatus can be integrated in existing laser processing tools, wherein only the at least one optical detector, preferably one or more single photodiodes and a controller for carrying out the method according to the first aspect have to be added to an existing laser processing tool.

In a fourth aspect of the present invention, a computer program is provided comprising program code means for causing the apparatus according to the second aspect or the laser processing tool according to the third aspect to carry out the steps of the method according to the first aspect when said computer program is carried out on the controller of the apparatus or of the laser processing tool.

Preferred embodiments of the invention are defined in the dependent claims. It shall be understood that the claimed apparatus, laser processing tool and computer program may have similar and/or identical preferred embodiments as the claimed method, in particular as defined in the dependent claims and as disclosed herein.

In an embodiment, the structure detectable by the at least one optical detector when the laser beam passes over the structure is at least one a circumferential edge of the workpiece and at least one feature that is arranged in a predefined position in or on the workpiece and configured to be detectable by the at least one optical detector. The structure may be the circumferential edge of the workpiece only, one or more features in the workpiece only, or may comprise both the circumferential edge and the one or more features. When the laser beam passes across the circumferential edge, the electromagnetic radiation detected by the at least one optical detector may include laser light of the laser beam reflected by the supporting member.

The at least one feature may already be present on the surface of the workpiece, or it may be especially provided on the workpiece for the purpose of workpiece localization by the method according to the first aspect.

In a further embodiment, the at least one feature comprises at least one of a hole, a recess, a color mark. Alternatively, any other suitable feature may be provided which is detectable by the at least one optical detector. The at least one feature may have a size or dimensions which may be a few µm only, or may have a size in the order of magnitude of the diameter of the focus of the laser beam on the workpiece.

In an embodiment, said scanning the laser beam over the workpiece comprises scanning the laser beam over the workpiece along a plurality of scanning lines, preferably in a grid pattern, such that the laser beam passes across the structure.

In an embodiment, the structure detectable by the at least one optical detector when the laser beam passes across the structure is non-rotationally symmetric with respect to a central axis of the workpiece. A non-rotationally symmetric structure does not necessarily mean that the workpiece itself has a generally non-rotationally symmetric shape or geometry. In contrast, the workpiece may have a rotationally symmetric circumferential shape or geometry, even a circular circumferential edge, wherein in this case the non-rotationally symmetric structure may comprise the circumferential edge and at least one feature on the workpiece, e.g. one or more features having a geometry and/or position on the workpiece which is/are non-rotationally symmetric with respect to the center axis of the workpiece.

A non-rotationally symmetric structure allows not only for accurately determining the position of the workpiece relative to the laser beam along the x- and y-axis of the supporting member, but also the rotational position (orientation) of the workpiece around a center axis of the supporting member can be accurately determined in a simple manner. Thus, rotational deviations of the determined position of the workpiece from an expected position in which the workpiece can be accurately processed by the laser beam can be accurately determined.

In an embodiment, wherein the workpiece has a rotationally symmetric circumferential edge, in particular a circular circumferential edge, and wherein the structure comprises the circumferential edge and at least one feature such that the structure is non-rotationally symmetric:
- said scanning the laser beam over the workpiece comprises scanning the laser beam over the workpiece along at least two scanning lines such that the laser beam passes across the circumferential edge of the workpiece at at least three passing points on the circumferential edge of the workpiece;
- said determining the position of the structure from the analysis of the registered data comprises:
   - determining the positions of the at least three passing points relative to the displacement coordinates;
   - determining from the determined positions of the at least three passing points the positions of the circumferential edge and of a center of the circumferential edge relative to the displacement coordinates; and
   - scanning the laser beam over the workpiece to determine the position of the at least one feature relative to the displacement coordinates; and
- said determining the position of the workpiece relative to the laser beam is based on the determined positions of the circumferential edge and the at least one feature relative to the displacement coordinates.

In this way, the position of a workpiece having a generally rotationally symmetric, in particular circular, geometry or shape relative to the laser beam can be accurately determined in a time saving and simple manner.

In a further embodiment, a further simplification and time saving is achieved, in that said determining the positions of the circumferential edge and of the center of the circular edge relative to the displacement coordinates comprises fitting a circle through the determined positions of the at least three passing points.

In this way, only three or four detected passing points are sufficient to determine the position of the circumferential edge and the position of the center of the circumferential edge relative to the laser beam. This embodiment is particularly advantageous for a workpiece having a circular circumferential edge, however will also work for workpieces having a rotationally symmetric, e.g. polygon-shaped, circumferential edge.

In particular, in the context of the previous embodiment, said scanning of the laser beam over the workpiece to determine the position of the at least one feature may comprise scanning the laser beam along a circular scanning line that is coaxial with the determined position of the circumferential, in particular circular, edge of the workpiece.

As the position of the at least one feature, which is detectable when the laser beam passes across the feature, is predefined on the workpiece, and, thus, at least the radial distance of the feature from the center of the circumferential edge is known, the radius of the circular scanning line can be set such that it is ensured that the laser beam will pass across the feature. Thus, scanning the laser beam along a plurality of circular scanning lines with different radii is avoided and the time required for the determination of the position of the workpiece relative to the laser beam is further reduced.

In the context of the previous embodiment, furthermore preferably said at least two scanning lines are two scanning lines only. In this way, the time required for performing the method is further reduced. Preferably, if the circumferential edge of the workpiece is circular, the two scanning lines may be secants of the circular circumferential edge of the workpiece. Further, the at least two scanning lines may be two mutually crossing scanning lines.

In a further embodiment, wherein the workpiece comprises a non-rotationally symmetric circumferential edge, and wherein the structure detectable by the at least one optical detector when the laser beam passes across the structure comprises the non-rotationally symmetric circumferential edge:
- said scanning the laser beam over the workpiece comprises scanning the laser beam over the workpiece along a plurality of scanning lines passing across the circumferential edge of the workpiece at a multitude of passing points, and
- said determining the position of the structure from the analysis of the registered data comprises:
   - determining the positions of the multitude of passing points relative to the displacement coordinates; and
   - determining from the positions of the multitude of passing points the position of the circumferential edge of the workpiece relative to the displacement coordinates.

In this embodiment, the circumferential edge of the workpiece is detected by detecting a plurality of passing points where the laser beam passes across the circumferential edge, and from the position of the detected circumferential edge relative to the displacement coordinates, the position of the workpiece relative to the laser beam is determined.

In all embodiments of the present invention, said electromagnetic radiation detected by the at least one optical detector may be laser light of the laser beam reflected by the workpiece or the supporting member, and/or a secondary emission from the workpiece or the supporting member which is caused by the interaction of the laser beam with the workpiece or the supporting member.

Further, the at least one characteristic of the detected electromagnetic radiation may be an intensity and/or a wavelength of the detected electromagnetic radiation, and the analysis of the registered data may include an analysis of the output data of the at least one optical detector relating to said at least one characteristic of the detected electromagnetic radiation. For example, if the electromagnetic radiation detected by the at least one optical detector is reflected laser light, the intensity of the electromagnetic radiation may vary depending on whether the laser beam is reflected by the surface of the workpiece or by the surface of the supporting member, i.e. at the circumferential edge of the workpiece which corresponds to the transition from the workpiece to the supporting member. Further, at the circumferential edge, the laser beam may be diffusively scattered instead of specularly reflected, so that the optical detector then detects a lowered intensity. As a further example, when the workpiece comprises a coloured feature, the wavelength of the electromagnetic radiation detected by the at least one optical detector may change when the lase beam passes across the coloured feature.

In preferred embodiments, the at least one optical detector comprises at least one photodiode, preferably two or more photodiodes distributed around a central axis of the supporting member or the laser beam generator. Alternatively, the one or more photodiodes may be arranged coaxially with or parallel to the laser beam.

The photodiodes may have different optical characteristics relative to each other. For example, the photodiodes may have different sensitivities to different wavelengths or wavelength bands relative to each other.

### BRIEF DESCRIPTION OF THE DRAWINGS

These and other aspects of the invention will be apparent from and elucidated with reference to the embodiments described hereinafter. In the following drawings
Fig. 1 shows a sketch of a laser processing tool;
Fig. 2 shows a flowchart of a method of determining a position of a workpiece relative to a laser beam of the laser processing tool in Fig. 1;
Fig. 3A shows a method step of determining a position of a workpiece having a circular circumferential edge;
Fig. 3B shows a diagram of an intensity of electromagnetic radiation detected by an optical detector used in the method, as function of a scanning path of the laser beam for two scanning lines according to the method step in Fig. 3A;
Fig. 3C shows a further method step of the method of determining a position of the workpiece relative to the laser beam in the embodiment of Fig. 3A;
Fig. 3D shows a further method step of the method of determining a position of the workpiece in the embodiment of Fig. 3A;
Fig. 3E shows a diagram of an intensity of electromagnetic radiation detected by the optical detector, as function of a scanning path of the laser beam according to the method step in Fig. 3D;
Fig. 4A shows an example of a feature which may be used in a method of determining a position of a workpiece relative to a laser beam;
Fig. 4B shows the feature of Fig. 4A in a coordinate system;
Fig. 4C shows a workpiece having the feature of Fig. 4A, wherein the workpiece is in an expected position;
Fig. 4D shows the workpiece of Fig. 4C in a position deviating from the expected position in Fig. 4C; and
Fig. 4E shows the workpiece of Fig. 4C in a further position deviating from the expected position in Fig. 4C.

### DETAILED DESCRIPTION OF THE EMBODIMENTS

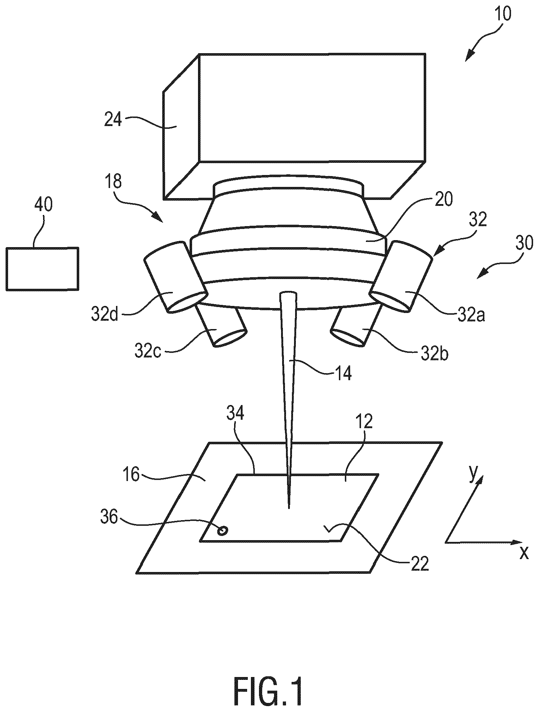

Fig. 1 shows a sketch of a laser processing tool labeled with general reference numeral 10. The laser processing tool 10 is configured to process a workpiece 12 by a laser beam 14.

Processing the workpiece 12 by the laser beam 14 may comprise any kind of processing, e.g. cutting, engraving, structuring, welding, treating by heat and/or coating.

The workpiece 12 may be made of any type of material, e.g. metal, plastics, glass, ceramics, stone, wood, textiles and paper. By way of examples, the laser processing tool 10 may be a laser cutting machine, wherein the laser beam 14 is used to cut the workpiece 12, or a laser ablation machine, wherein the laser beam 14 is used to ablate material from the workpiece 12.

The workpiece 12 may have an arbitrary geometry or shape. In Fig. 1, the workpiece 12 is shown with a rectangular geometry. It is to be understood, however, that this is only an example for the geometry or shape of a workpiece.

The laser processing tool 10 comprises a supporting member 16 configured to support the workpiece 12 during laser processing. The supporting member 16 may be configured as a stage or table on which the workpiece 12 may be laid down so as to be supported in vertical direction (also referred to herein as the z-direction). The workpiece 12 may be fixed to the supporting member 16 in directions perpendicular to the z-direction, i.e. in lateral directions (also referred to herein x- and y- directions). The workpiece 12 may in other embodiments be supported by the supporting member 16 without being fixed to the supporting member 16 in the x- and y-directions.

The laser processing tool 10 further comprises a laser beam generator 18. The laser beam generator 18 is configured to generate the laser beam 14. The laser beam generator 18 may be of any known type of laser sources, e.g. a Nd:YAG laser, a diode laser, a CO₂ laser, an excimer laser, etc. The laser beam generator 18 may be configured to generate the laser beam 14 as a sequence of ultrashort pulses (USP).

The laser beam generated by the laser beam generator 18 is fed through a focusing lens 20 configured to focus the laser beam 14 onto a working plane. The working plane typically is a surface 22 of the workpiece 12.

The laser processing tool 10 further comprises a scanning device 24 configured to displace the laser beam 14 and/or the supporting member 16 (thereby displacing the workpiece 12) in order to scan the laser beam 14 over the workpiece 12. In the present embodiment, the scanning device 24 is configured to displace the laser beam 14 relative to the supporting member 16 along xy-axes inscribed in Fig. 1. To this end, the scanning device 24 may be configured to displace the laser beam generator 18 together with the focusing lens 20. In other embodiments not shown, the supporting member 16 may by displaceable by the scanning device. To this end, the supporting member 16 may be configured as an xy-stage for example.

The laser processing tool 10 further comprises an apparatus 30 for determining a position of the workpiece 12 relative to the laser beam 14. The apparatus 30 comprises at least one optical detector 32. In the present embodiment, the position determining apparatus 30 comprises more than one optical detector 32, e.g. four optical detectors 32a, 32b, 32c, 32d. The optical detector 32 may be configured as a single photodiode. In the present embodiment, each of the optical detectors 32a, 32b, 32c and 32d may be configured as a single photodiode. The at least one optical detector 32 is arranged in a predefined position relative to the laser beam 14. The one or more optical detectors 32, 32b, 32c, 32d may be distributed around a central axis of the supporting member (16) or the laser beam generator (18). In the present embodiment, the optical detectors (photodiodes) 32a, 32b, 32c, 32d are arranged circumferentially around the laser beam generator 18, especially around the focusing lens 20. The optical detectors 32a, 32b, 32c, 32d may be distributed in angularly equidistant arrangement around the laser beam generator 18/ focusing lens 20. In other embodiments (not shown), the at least one optical detector 32 may be arranged coaxially with or parallel to the laser beam 14.

The optical detectors 32a-32d (photodiodes) may be sensitive to electromagnetic radiation of specific wavelengths or wavelength bands. The photodiodes may be sensitive to different wavelengths or wavelength bands relative to each other. In particular, the optical detectors 32a-32d may be sensitive to the wavelength of the laser beam 14, or to near infrared (NIR) emission, or to wavelengths in the visible spectral range (VIS emission), or to wavelengths in the UV (ultraviolet) spectral range, etc.

The at least one optical detector 32 is arranged and configured to detect electromagnetic radiation coming from locations on the workpiece 12, where the laser beam 14 impinges on the workpiece 12. The electromagnetic radiation detected by the at least one optical detector 32 may be laser light of the laser beam 14 reflected by the workpiece 12, or reflected by the supporting member 16, depending on whether the laser beam 14 impinges on the workpiece 12 or on the supporting member 16. Alternatively or additionally, the electromagnetic radiation detected by the at least one optical detector 32 may be secondary emission from the workpiece 12 or the supporting member 16 which is caused by the interaction of the laser beam 14 with the workpiece 12 or the supporting member 16. The secondary emission may have a wavelength different from the wavelength of the laser beam 14.

The workpiece 12 comprises a structure having a predefined position on the workpiece 12 and being detectable by the at least one detector 32 based on a change of at least one characteristic of the detected electromagnetic radiation when the laser beam 14 passes across the structure. This structure, which may also be referred to as a reference structure, may comprise a circumferential edge 34 of the workpiece 12 and/or at least one feature 36 that is arranged in a predefined position on the workpiece 12 and is configured to be detectable by the at least one optical detector 32 when the laser beam 14 passes across the feature. At least one of a position and a geometry of the at least one feature 36 may be non-rotationally symmetric with respect to a center of the circumferential edge 34 of the workpiece 12. The structure comprising the circumferential edge 34 of the workpiece 12 and/or the at least one feature preferentially is non-rotationally symmetric with respect to the center axis of the workpiece 12.

The at least one feature 36 may be of any type, for example the feature 36 may be a hole or an engraved recess or a relief in the surface 22 of the workpiece 12, or may be a color mark (paint) on the surface 22 of the workpiece 12. There may be more than one feature 36 on the workpiece 12. In general, the feature 36 is configured to change a characteristic of the electromagnetic radiation received by the at least one optical detector 32 when the laser beam 14 passes across the feature 36. The characteristic may be a wavelength and/or intensity of the electromagnetic radiation.

For example, when the laser beam 14 passes across the circumferential edge 34 and/or the feature 36, an intensity and/or wavelength of the electromagnetic radiation detected by the at least one optical detector 32 will change. This effect will be used to detect the structure and, therefrom, to determine the position of the workpiece 12 relative to the laser beam 14 as will be described herein below.

The structure or reference structure which is configured to be detectable by the at least one optical detector 32 based on the change of at least one characteristic of the detected electromagnetic radiation when the laser beam passes across the structure preferentially is non-rotationally symmetric.

The apparatus 30 for determining the position of the workpiece 12 relative to the laser beam 14 further comprises a controller 40. The controller 40 may control the scanning device 24. Further, the controller 40 may receive output signals (output data) from the at least one optical detector 32, in the present embodiment from the optical detectors 32a-32d. The controller 40 also receives data from the scanning device 24 so as to obtain, during scanning the laser beam 14 over the workpiece 12, displacement coordinates which are indicative of a relative displacement between the laser beam 14 and the supporting member 16. The controller 40 is configured to determine the position of the workpiece 12 relative to the laser beam 14 based on the output data received from the at least one optical detector 32 and the displacement coordinates indicative of the relative displacement between the laser beam 14 and the supporting member 16. The displacement coordinates may be coordinates of the scanning device 24. For example, in case of a galvo-motor based scanning device 24, the displacement coordinates may comprise the x- and y- axes' positions of the galvo-motors of the scanning device 24.

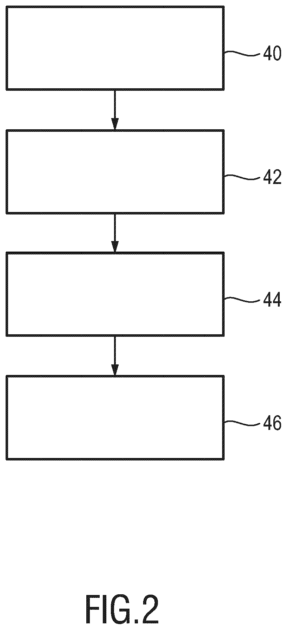

In the following, a method of determining the position of the workpiece 12 relative to the laser beam 14 will be described in general with reference to Fig. 2.

At 40, the laser beam 14 is scanned over the workpiece 12 by means of the scanning device 24. Scanning may be performed by displacing the laser beam 14, by displacing the supporting member 16 (and thereby the workpiece 12), and/or by displacing both the laser beam 14 and the supporting member 16.

Further at 40, during said scanning the laser beam 14 over the workpiece 12, displacement coordinates are obtained and recorded which are indicative of a relative displacement between the laser beam 14 and the supporting member 16.

The method further comprises, at 42, collecting output data from the at least one optical detector 32. Collecting output data from the at least one optical detector is performed synchronously with the scanning of the laser beam 14 over the workpiece 12. When the laser beam 14 passes, during scanning, across the detectable reference structure, in particular the circumferential edge 34 and/or the at least one feature 36, the at least one optical detector 32 will receive electromagnetic radiation from the passing point at the circumferential edge 34 and/or the passing point at the at least one feature 36. The electromagnetic radiation received from these passing point or points will have a characteristic, e.g. intensity and/or wavelength, which has changed in comparison with electromagnetic radiation received from locations outside these passing points, i.e. when the laser beam 14 impinges on locations on the surface 22 of the workpiece 12 where the reference structure is not present.

Further at 42, the output data from the at least one optical detector 32 and the displacement coordinates are registered to each other to obtain registered data comprising the displacement coordinates and the output data of the at least one optical detector. That is, each displacement coordinate is assigned to an output data of the at least one optical detector 32. The registered data can then be mapped to the physical coordinates on the scan field. With these coordinates being sampled synchronously to e.g. the axes' positions of the galvo motors of the scanning device 24, each data point, i.e. each pixel, can be mapped onto the surface 22 of the workpiece 12.

The data acquisition and processing, as well as the generation of the feedback, may be done on an edge device that can for example be based on an FPGA or as a program running on the controller 40 or another computer.

At 44, from an analysis of the registered data obtained in step 42, the position of the reference structure of the workpiece 12 relative to the displacement coordinates is determined. The analysis of the registered data may include an analysis of the output data of the at least one optical detector 32, wherein the analysis may relate to an intensity and/or wavelength of the electromagnetic radiation detected by the at least one optical detector 32 during scanning of the laser beam 14 over the workpiece 12.

At 46, the position of the workpiece 12 relative to the laser beam 14 is determined based on the determined position of the reference structure relative to the displacement coordinates.

The method of determining the position of the workpiece 12 relative to the laser beam 14 may be performed prior to laser processing the workpiece 12 with the laser beam 14 without altering the material of the workpiece 12 (e.g. defocused, or with a low laser power below the ablation threshold), or during the first scan of the laser beam 14 over the surface 22 of the workpiece 12 during the ablation process.

Scanning the laser beam 14 over the workpiece 12 at step 40 may comprise scanning the laser beam 14 over the workpiece 12 along a plurality of scanning lines, for example in a grid pattern, preferentially such that the laser beam 14 passes across the circumferential edge 34 of the workpiece 12, and/or across the at least one feature 36 of the workpiece 12.

As mentioned above, the reference structure detectable by the at least one optical detector 32 may be non-rotationally symmetric with respect to a central axis of the workpiece 12. When the workpiece 12 has a rotationally symmetric edge, the feature 36 should preferably be in a position on the workpiece 12 or have a geometry which is non-rotationally symmetric with respect to a center of the circumferential edge. The edge 34 together with the feature 36 then forms a non-rotationally symmetric reference structure of the workpiece 12.

In other embodiments, the workpiece 12 may comprise a non-rotationally symmetric circumferential edge such that the reference structure comprises the non-rotationally symmetric circumferential edge. In such an embodiment scanning the laser beam 14 over the workpiece 12 at step 40 may comprise scanning the laser beam 14 over the workpiece 12 along a plurality of scanning lines passing across the edge of the workpiece at a multitude of passing points. Step 44 may then comprise determining from the positions of the multitude of passing points the position of the circumferential edge of the workpiece 12 relative to the displacement coordinates in order to determine the position of the workpiece 12 relative to the laser beam 14.

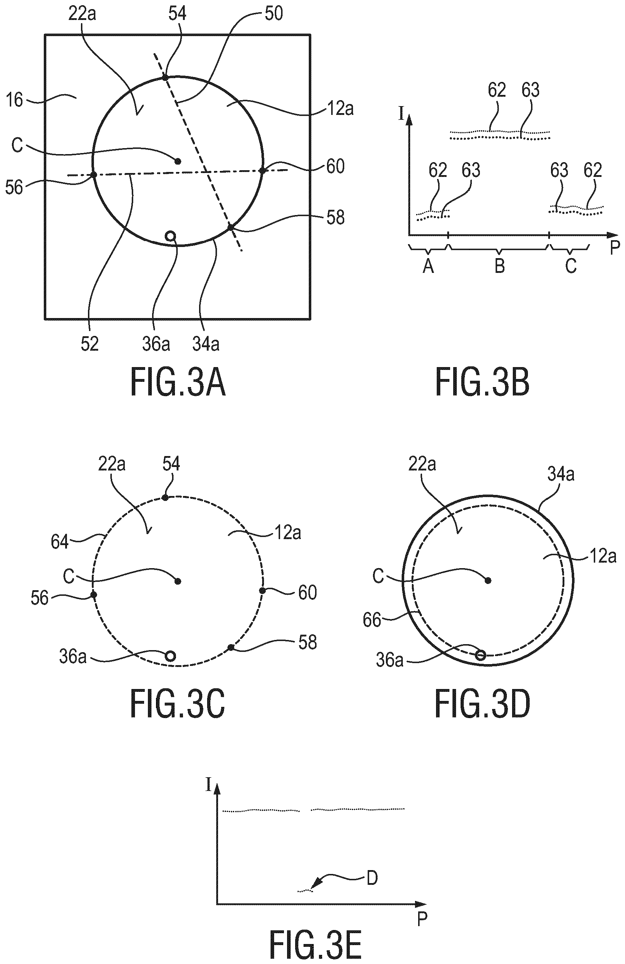

With reference to Figs. 3A-3E, a more specific embodiment of a method of determining a position of a workpiece relative to a laser beam of a laser processing tool, like laser processing tool 10, will be described.

The workpiece labeled with reference numeral 12a is a workpiece that has a rotationally symmetric circumferential edge 34a. In particular, the circumferential edge 34a is circular. However, the workpiece 12a has a structure detectable by the at least one optical detector 32 which in its entirety is non-rotationally symmetric. This is achieved in that the structure comprises the circumferential edge 34a and a feature 36a (which may be configured as a hole or engraving or paint, for example) which is provided on the workpiece 12a in a predefined and known position which is non-rotationally symmetric with respect to the center of the circumferential edge 34a. Preferentially, the feature 36a may be arranged on the workpiece 12a near the circumferential edge 34a, for example.

With reference to Fig. 2 again and Fig. 3A, scanning the laser beam 14 over the workpiece 12a is performed (step 40 in Fig. 2). Scanning the laser beam 14 over the workpiece 12a is performed by scanning the laser beam 14 along at least two scanning lines, preferably only two scanning lines 50 and 52, such that the laser beam 14 passes across the circumferential edge 34a of the workpiece 12a at at least three passing points, in the present embodiment at four passing points 54, 56, 58 and 60. During scanning the laser beam 14 over the workpiece 12a, by means of the scanning device 24, displacement coordinates are obtained which are indicative of the relative displacement between the laser beam 14 and the supporting member 16. When the laser beam 14 is scanned over the surface 22a of the workpiece 12a, laser light of the laser beam 14 is reflected from the workpiece 12a or from the supporting member 16, and this reflected electromagnetic radiation is received by the optical detector 32 which generates output data from the received electromagnetic radiation.

Synchronously with the scanning of the laser beam 14 over the workpiece 12a, output data from the at least one optical detector 32 is collected, e.g. by the controller 40, to obtain registered data comprising the displacement coordinates and the output data of the at least one optical detector registered to each other (step 42 in Fig. 2). When the laser beam 14 passes across the circular edge 34a at the passing points 54, 56, 58, 60, the output data of the at least one optical detector 32 will change in terms of an intensity of the received electromagnetic radiation in comparison to the situation when the laser beam 14 is on the surface 22a of the workpiece 12a in positions inside the edge 34a.

Fig. 3B shows the intensity I of the electromagnetic radiation received by the optical detector 32 in dependence on the scan path P along the two scanning lines 50 and 52. When the laser beam 14 is outside the workpiece 12a, electromagnetic radiation from the supporting member 16 is received by the at least one detector 32. When the laser beam 14 passes across the passing points 54, 56, 58, 60, the intensity of the detected electromagnetic radiation changes. Assuming that the reflectivity of the supporting member 16 is lower than that of the surface of the workpiece 12a, the intensity of the reflected laser light of the laser beam 14 changes from `low' outside the circumferential edge 34a of the workpiece 12a to `high' inside the circumferential edge 34a of the workpiece 12a when the laser beam 14 passes across the passing points 54, 56, 58 and 60. In sections A and C along the scanning path, the laser beam 14 impinges on the supporting member 16, and in section B the laser beam impinges on the workpiece 12a. As can be seen, the change of the intensity at the passing points 54, 56, 58, 60 is significant enough to clearly detect the passing points 54, 56, 58, 60 in the output data of the optical detector 32.

In Fig. 3B, thin points 62 reveal the intensity I of the received electromagnetic radiation when the laser beam 14 is scanned along one of the two scanning lines 50 and 52, and bold points 63 reveal the intensity I of the received electromagnetic radiation when the laser beam 14 is scanned along the other of the two scanning lines 50 and 52. Thus, the passing points 54, 56, 58 and 60 can be clearly detected from the output data of the at least one optical detector 32. As mentioned above, the output data of the at least one optical detector 32 are registered with the displacement coordinates (step 42 of Fig. 2), and from the registered data the positions of the passing points 54, 56, 58, 60 relative to the displacement coordinates are determined.

From the positions of the passing points 54, 56, 58, 60 thus determined, the positions of the circumferential edge 34a and its center C can be determined relative to the displacement coordinates (as part of step 44 in Fig. 2). Determining the positions of the circumferential edge 34a and of the center C of the circular edge 34a relative to the displacement coordinates may comprise fitting a circle 64 through the determined positions of the passing points 54, 56, 58, 60, as shown in Fig. 3C (in Fig. 3C, the supporting member 16 is not drawn).

Next, the position of the feature 36a relative to the displacement coordinates is determined (as part of step 44 in Fig. 2). To this end, the laser beam 14 is again scanned over the workpiece 12a, now along a circular scanning line 66 (shown as broken line in Fig. 3D, the supporting member 16 is omitted again in Fig. 3D) that is coaxial with the determined position of the circumferential edge 34a of the workpiece 12a. As the position of the feature 36a is predefined and thus known, i.e. the radial distance of the feature 36a from the center C is predefined and known, the radius of the circular scanning line 66 can be set in advance to the expected radial distance of the feature 36a from the center C. When scanning the laser beam 14 along the circular scanning line 66 according to Fig. 3D, the laser beam 66 will pass across the feature 36a, and when the laser beam 14 passes across the feature 36a, the intensity and/or wavelength of the electromagnetic radiation as detected by the at least one optical detector 32 changes, as shown in Fig. 3E. Fig. 3E shows the intensity I as detected by the at least one detector 32 along the path P, which is now the circumferential scanning line 66. As shown in Fig. 3E, the intensity of the electromagnetic radiation received by the optical detector 32 changes from 'high' to `low' (section D), when the laser beam 14 passes across the feature 36a. Again, the output data of the at least one optical detector 32 is collected synchronously with and during the scanning of the laser beam 14 along the circular scanning line 66, and the output data of the optical detector 32 is registered with the displacement coordinates obtained during scanning the laser beam 14 over the workpiece 12a.

The position of the workpiece 12a relative to the laser beam 14 can then be determined based on the determined position of the circumferential edge 34a and the position of the feature 36a relative to the displacement coordinates (step 46 in Fig. 2).

For a rotationally symmetric geometry of the workpiece it is sufficient to scan the laser beam 14 over the workpiece along two scanning lines 50 and 52 only. The scanning lines 50 and 52 may be secants (including the diameter) of the circular edge 34a of the circular edge 34a. The scanning lines preferably are mutually crossing scanning lines.

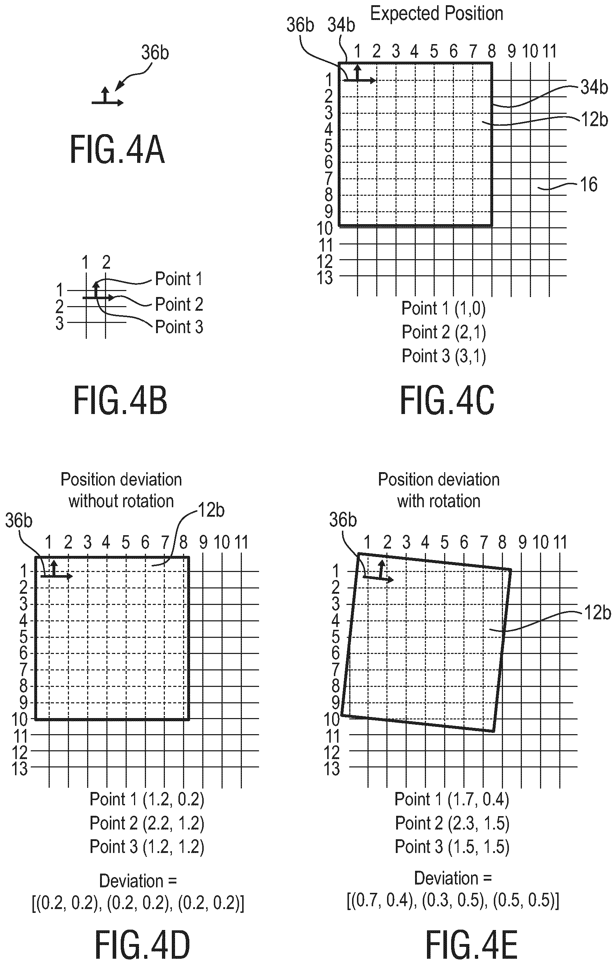

Figs. 4A to 4E show another example of a workpiece 12b of which the position may be determined relative to a laser beam like laser beam 14 in Fig. 1. The workpiece 12b is of rectangular shape, i.e. it has a rectangular circumferential edge 34b. The workpiece 12b has a non-rotationally symmetric structure as reference structure which comprises a feature 36b exemplarily shown in Fig. 4A. The feature 36b is formed by two mutually crossing arrows of different lengths in this example. The feature 36b has three distinctive points, wherein point 1 is the tip of the first arrow, point 2 the tip of the second arrow and point 3 the intersection point of the first arrow with the second arrow, as shown in Fig. 4B.

A method of determining the position of the workpiece 12b relative to a laser beam, like laser beam 14 of the laser processing tool 10 in Fig. 1, may be performed as outlined above with reference to Fig. 2. The feature 36b has a predefined position on the workpiece 12b and has itself a non-rotationally symmetric geometry and position with respect to the center of the workpiece 12b.

Figs. 4C to 4E show a scan field coordinate system (x-and y-coordinates) in arbitrary units (e.g. from 1 to 11 along the x-axis and 1 to 13 along the y-axis). The supporting member 16 is shown in Fig. 4C as the part outside the workpiece 12b.

The method of determining the position of the workpiece 12b relative to a laser beam, like laser beam 14, includes scanning the laser beam over the workpiece 12b by means of the scanning device 24 and, during said scanning, obtaining displacement coordinates indicative of a relative displacement between the laser beam 14 and the supporting member 16; synchronously with the scanning, collecting output data from the at least one detector 32 to obtain registered data comprising the displacement coordinates and the output data registered to each other; determining the position of the reference structure, here the feature 36b of the workpiece 12b, relative to the displacement coordinates from an analysis of the registered data; and determining the position of the workpiece 12b relative to the laser beam based on the determined position of the structure (feature 36b) relative to the displacement coordinates.

The three points 1, 2 and 3 of the feature 36b may be identified as described above by analyzing the registered data, which include the output data of the at least one optical detector 32 as to a change of a characteristic of the detected electromagnetic radiation, like intensity and/or wavelength of the detected electromagnetic radiation.

Fig. 4C shows the workpiece 12b in an expected or correct position with respect to the scan field, and, thus, with respect to the laser beam. In the expected position, points 1 to 3 have the coordinates as indicated in Fig. 4C.

Fig. 4D shows, as an example, a slight shift of the workpiece 12b along the x-axis and along the y-axis which has been determined by the position determination method as described above. The coordinates of points 1 to 3 as detected by the position determination method are indicated in Fig. 4D.

Fig. 4E shows, as an example, a slight position deviation of the workpiece 12b including a slight rotation of the workpiece 12b about its center axis. The coordinates of points 1 to 3 as determined by the position determination method as described herein are indicated in Fig. 4E.

When the position of the workpiece 12 relative to the laser beam of the laser processing tool has been determined, the axes' positions of the scanning device 24 needed to correct the deviation of the position of the workpiece 12b from the expected position can be computed. In the example of Fig. 4D, since there is no rotation (point 1 and point 3 have the same x coordinate and point 2 and point 3 have the same y coordinate), the x- and y-axes of the scanning device just need to be moved by the corresponding difference. In the example of Fig. 4E, either the rotational axis of the scanning device needs to be employed, or the scan path during laser processing the workpiece 12b has to be adjusted according to the rotation of the workpiece 12b.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method of determining a position of a workpiece (12; 12a; 12b) relative to a laser beam (14) of a laser processing tool (10), wherein the workpiece (12; 12a; 12b) is to be processed by the laser beam (14), wherein the laser processing tool (10) comprises:
- a supporting member (16) configured for supporting the workpiece (12; 12a; 12b);
- a laser beam generator (18) configured for generating the laser beam (14);
- a scanning device (24) configured for displacing at least one of the laser beam (14) and the supporting member (16) so as to scan the laser beam (14) over the workpiece (12; 12a; 12b); and
- at least one optical detector (32) arranged in a predefined position relative to the laser beam (14) and configured to detect electromagnetic radiation coming from locations on the workpiece (12; 12a; 12b), where the laser beam (14) impinges on the workpiece (12; 12a; 12b);
wherein the workpiece (12; 12a; 12b) comprises a structure having a predefined position on the workpiece (12; 12a; 12b) and being configured to be detectable by the at least one optical detector (32) based on a change of at least one characteristic of said detected electromagnetic radiation when the laser beam (14) passes across the structure;
wherein the method comprises the steps of:
- scanning the laser beam (14) over the workpiece (12; 12a; 12b) by means of the scanning device (24) and, during said scanning, obtaining displacement coordinates indicative of a relative displacement between the laser beam (14) and the supporting member (16);
- synchronously with the scanning, collecting output data from the at least one optical detector (32) to obtain registered data comprising the displacement coordinates and the output data registered to each other;
- determining the position of the structure of the workpiece (12; 12a; 12b) relative to the displacement coordinates from an analysis of the registered data; and
- determining the position of the workpiece (12; 12a; 12b) relative to the laser beam (14) based on the determined position of the structure relative to the displacement coordinates.

2. The method as claimed in claim 1, wherein the structure is at least one of a circumferential edge (34; 34a) of the workpiece and at least one feature (36; 36a; 36b) that is arranged in a predefined position in or on the workpiece (12; 12a; 12b) and configured to be detectable by the at least one optical detector (32).

3. The method as claimed in claim 2, wherein the at least one feature (36; 36a; 36b) comprises at least one of a hole, a recess, a color mark.

4. The method as claimed in claim 2 or 3, wherein said scanning the laser beam (14) over the workpiece (12; 12a; 12b) comprises scanning the laser beam over the workpiece (12; 12a; 12b) along a plurality of scanning lines, preferably in a grid pattern, such that the laser beam (14) passes across the structure.

5. The method as claimed in any one of claims 2 to 4, wherein the structure is non-rotationally symmetric with respect to a central axis of the workpiece (12; 12a; 12b).

6. The method as claimed in claim 5, wherein the workpiece (12a) has a rotationally symmetric circumferential edge (34a), and wherein the structure comprises the circumferential edge (34a) and the at least one feature (36a), and wherein:
- said scanning the laser beam (14) over the workpiece (12a) comprises scanning the laser beam (14) over the workpiece (12a) along at least two scanning lines (50; 52) such that the laser beam (14) passes across the circumferential edge (34a) of the workpiece (12a) at at least three passing points (54, 56, 58, 60) on the circumferential edge (34a) of the workpiece (12a);
- said determining the position of the structure from the analysis of the registered data comprises:
- determining the positions of the at least three passing points (54, 56, 58, 60) relative to the displacement coordinates;
- determining from the determined positions of the at least three passing points (54, 56, 58, 60) the positions of the circumferential edge (34a) and of a center (C) of the circumferential edge (34a) relative to the displacement coordinates; and
- scanning the laser beam (14) over the workpiece (12a) to determine the position of the at least one feature (36a) relative to the displacement coordinates; and
- said determining the position of the workpiece (12a) relative to the laser beam (14) is based on the determined positions of the circumferential edge (34a) and the at least one feature (36a) relative to the displacement coordinates.

7. The method as claimed in claim 6, wherein determining the positions of the circumferential edge (34a) and of the center (C) of the circumferential edge (34a) relative to the displacement coordinates comprises fitting a circle (64) through the determined positions of the at least three passing points (54, 56, 58, 60).

8. The method as claimed in claim 6 or 7, wherein said scanning the laser beam (14) over the workpiece (12a) to determine the position of the at least one feature (36a) comprises scanning the laser beam (14) along a circular scanning line (66) that is coaxial with the determined position of the circumferential edge (34a) of the workpiece (12a).

9. The method as claimed in any one of claims 6 to 8, wherein said at least two scanning lines (50, 52) are two scanning lines only, preferably two mutually crossing scanning lines (50, 52).

10. The method as claimed in claim 5, wherein the workpiece (12) comprises a non-rotationally symmetric circumferential edge, and the structure comprises the non-rotationally symmetric circumferential edge (34), wherein:
- said scanning the laser beam (14) over the workpiece (12) comprises scanning the laser beam (14) over the workpiece along a plurality of scanning lines passing across the circumferential edge (34) of the workpiece at a multitude of passing points, and
- said determining the position of the structure from the analysis of the registered data comprises:
- determining the positions of the multitude of passing points relative to the displacement coordinates; and
- determining from the positions of the multitude of passing points the position of the circumferential edge (34) of the workpiece (12) relative to the displacement coordinates.

11. The method as claimed in any one of claims 1 to 10, wherein said electromagnetic radiation detected by the at least one optical detector (32) is at least one of:
- laser light of the laser beam reflected by the workpiece (12; 12a; 12b) or the supporting member (16), and
- a secondary emission from the workpiece (12; 12a; 12b) or the supporting member (16) which is caused by the interaction of the laser beam (14) with the workpiece (12; 12a; 12b) or the supporting member (16).

12. The method as claimed in any one of claims 1 to 11, wherein the at least one characteristic of the detected electromagnetic radiation is at least one of intensity and wavelength of the detected electromagnetic radiation, and wherein the analysis of the registered data includes an analysis of the output data of the at least one optical detector (32) relating to the at least one characteristic.

13. The method as claimed in any one of claims 1 to 12, wherein the at least one optical detector (32) comprises at least one photodiode, preferably two or more photodiodes (32a, 32b, 32c, 32d) distributed around a central axis of the supporting member (16) or the laser beam generator (18).

14. An apparatus (30) for determining a position of a workpiece (12; 12a; 12b) relative to a laser beam (14) of a laser processing tool (10), wherein the workpiece (12; 12a; 12b) is to be processed by the laser beam (14), the laser processing tool (10) comprising:
- a supporting member (16) configured for supporting the workpiece (12; 12a; 12b);
- a laser beam generator (18) configured for generating the laser beam (14);
- a scanning device (24) configured for displacing at least one of the laser beam (14) and the supporting member (16) so as to scan the laser beam (14) over the workpiece (12; 12a; 12b);
wherein the apparatus (30) comprises:
- at least one optical detector (32) arranged in a predefined position relative to the laser beam (14) and configured to detect electromagnetic radiation coming from locations on the workpiece (12; 12a; 12b), where the laser beam (14) impinges on the workpiece (12; 12a; 12b),
wherein the workpiece (12; 12a; 12b) comprises a structure having a predefined position on the workpiece (12; 12a; 12b) and being configured to be detectable by the at least one detector (32) based on a change of at least one characteristic of said detected electromagnetic radiation when the laser beam (14) passes across the structure; and
- a controller (40) configured to:
- cause the scanning device (24) to scan the laser beam (14) over the workpiece (12; 12a; 12b);
- obtain, during said scanning, displacement coordinates indicative of a relative displacement between the laser beam (14) and the supporting member (16);
- synchronously with the scanning, collect output data from the at least one optical detector (32) to obtain registered data comprising the displacement coordinates and the output data registered to each other;
- determine the position of the structure of the workpiece (12; 12a; 12b) relative to the displacement coordinates from an analysis of the registered data; and
- determine the position of the workpiece (12; 12a; 12b) relative to the laser beam (14) based on the determined position of the structure relative to the displacement coordinates.

15. A laser processing tool (10) for processing a workpiece (12; 12a; 12b) by a laser beam (14), comprising:
- a supporting member (16) configured for supporting the workpiece (12; 12a; 12b);
- a laser beam generator (18) configured for generating the laser beam (14);
- a scanning device (24) configured for displacing at least one of the laser beam (14) and the supporting member (16) so as to scan the laser beam (14) over the workpiece (12; 12a; 12b); and
an apparatus (30) for determining a position of the workpiece (12; 12a; 12b) relative to the laser beam (14) generated by the laser beam generator (18), said apparatus (30) comprising:
- at least one optical detector (32) arranged in a predefined position relative to the laser beam (14) and configured to detect electromagnetic radiation coming from locations on the workpiece (12; 12a; 12b), where the laser beam impinges on the workpiece (12; 12a; 12b);
wherein the workpiece (12; 12a; 12b) comprises a structure having a predefined position on the workpiece (12; 12a; 12b) and being configured to be detectable by the at least one optical detector (32) based on a change of at least one characteristic of said detected electromagnetic radiation when the laser beam (14) passes across the structure; and
- a controller (40) configured to:
- cause the scanning device (24) to scan the laser beam (14) over the workpiece (12; 12a; 12b);
obtain, during said scanning, displacement coordinates indicative of a relative displacement between the laser beam (14) and the supporting member (16);
- synchronously with the scanning, collect output data from the at least one optical detector (32) to obtain registered data comprising the displacement coordinates and the output data registered to each other;
- determine the position of the structure of the workpiece (12; 12a; 12b) relative to the displacement coordinates from an analysis of the registered data; and
- determine the position of the workpiece (12; 12a; 12b) relative to the laser beam (14) based on the determined position of the structure relative to the displacement coordinates.

16. A computer program comprising program code means for causing the apparatus (30) as claimed in claim 14 or the laser processing tool (10) as claimed in claim 15 to carry out the steps of the method as claimed in any one of claims 1 to 13 when said computer program is carried out on a controller (40) of the apparatus (30) or of the laser processing tool (10).
